# EUROPEAN PATENT APPLICATION

(11) **EP 4 234 181 A1**
(43) Date of publication of application: **30.08.2023**
(21) Application number: 21882680.8
(22) Date of filing: 13.10.2021
(51) Int. Cl.: B25J 13/00, G05D 1/00

(54) **INFORMATION PROCESSING DEVICE, INFORMATION PROCESSING METHOD, AND STORAGE MEDIUM**

(30) Priority: 21.10.2020 JP 2020176568
(71) Applicant: Avatarin Inc., Tokyo 103-0022 (JP)
(72) Inventor: FUKABORI, Akira, Tokyo 103-0022 (JP); KAJITANI, Kevin, Tokyo 103-0022 (JP)
(74) Representative: D Young & Co LLP
(86) International application number: PCT/JP2021/037926
(87) International publication number: WO 2022/085539

(57) **Abstract**

A technique related to allowing a more valuable experience to be gained is provided. A computer performs acquiring information on a selection condition, setting a first robot, among a plurality of unfixed robots selected in accordance with the selection condition, as an operation target to be operated by a terminal device, and enabling the operation target to be switched from the first robot to a second robot, which is different from the first robot, among the plurality of robots selected.

## Description

### Technical Field

**The** present invention relates to an information processing device, an information processing method, and a storage medium.

### Background Art

Teleconferencing systems that use the Internet have become popular in recent years, and telepresence robots that can not only talk while looking at persons' faces but also allow users at remote places to control the directions and positions of cameras are well known.

Patent Document 1 discloses a camera-equipped mobile object that provides a captured image to a user at a remote place.

### Citation List

### Patent Document

Patent Document 1: Patent Publication JP-A-2019-062308

### Summary

### Technical Problem

With a telepresence robot of the related art, a user remotely operates the robot, so that the robot functions as a so-called alter ego of the user, and the user can gain experiences in a place where the robot is located. This itself is of high value for users, but there is a demand for a more valuable experience. However, with telepresence robots of the related art, a user remotely operates a determined specific robot, and thus there is a limit to the user's experience to be gained.

An object of the present invention is to provide a technique related to enabling a user operating a robot to gain a more valuable experience to be gained.

### Solution to Problem

**An** information processing device according to an aspect of the present invention is an information processing device including a processor and a storage unit, in which the processor is configured to execute a program stored in the storage unit to perform a control method including acquiring information on a selection condition, setting a first robot as an operation target to be operated by a terminal device among a plurality of unfixed robots selected in accordance with the selection condition, and enabling the operation target to be switched from the first robot to a second robot, which is different from the first robot, among the plurality of robots selected in accordance with the selection condition.

An information processing method according to an aspect of the present invention is an information processing method performed by a computer, the information processing method including acquiring information on a selection condition, setting a first robot, among a plurality of unfixed robots selected in accordance with the selection condition, as an operation target to be operated by a terminal device, and enabling the operation target to be switched from the first robot to a second robot, which is different from the first robot, among the plurality of robots selected.

A storage medium according to an aspect of the present invention is a storage medium storing a program for executing an information processing method including causing a computer to acquire information on a selection condition, set a first robot, among a plurality of unfixed robots selected in accordance with the selection condition, as an operation target to be operated by a terminal device, and enable the operation target to be switched from the first robot to a second robot, which is different from the first robot, among the plurality of robots selected.

### Advantageous Effects of Invention

According to the present invention, a user operating a robot can gain a more valuable experience.

### Brief Description of Drawings

Fig. 1 is a diagram illustrating a configuration of a system in an embodiment.
Fig. 2 is a conceptual diagram for explaining a terminal device and a robot in the embodiment.
Fig. 3 is a conceptual diagram for explaining an outline of a method of operating a robot in the embodiment.
Fig. 4 is a conceptual diagram for explaining an outline of a method of operating a robot in the embodiment.
Fig. 5 is a block diagram illustrating a functional configuration of a server device in the embodiment.
Fig. 6 is a flowchart illustrating a processing flow of the server device in the embodiment.
Fig. 7 is a conceptual diagram illustrating an example of an image displayed on the terminal device in the embodiment.
Fig. 8 is a conceptual diagram illustrating a hardware configuration of a computer used by the system in the embodiment.
Fig. 9 is a conceptual diagram illustrating a hardware configuration of the robot in the embodiment.

### Description of Embodiments

Hereinafter, an embodiment of the present invention will be described. Note that the following embodiment is an example for explaining the present invention, and is not intended to limit the present invention only to the embodiment. In addition, the present invention can be modified in various ways without departing from the gist thereof. Further, those skilled in the art can adopt embodiments in which each element to be described below is replaced with equivalents, and such embodiments are also included in the scope of the present invention.

### <System configuration>

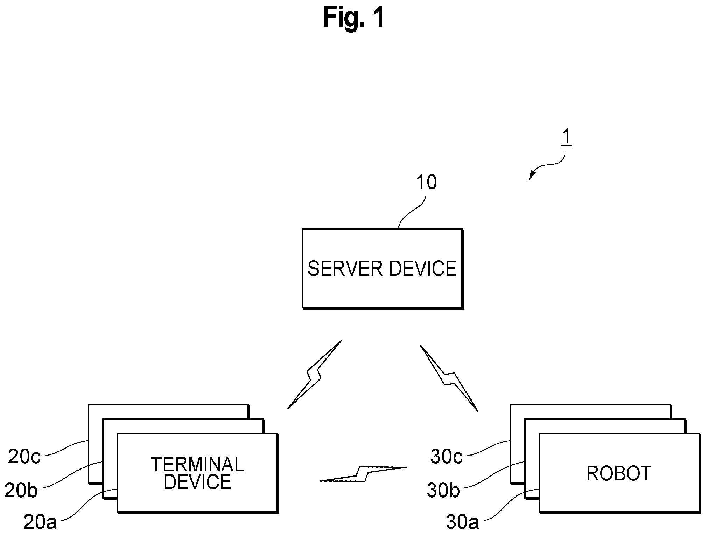

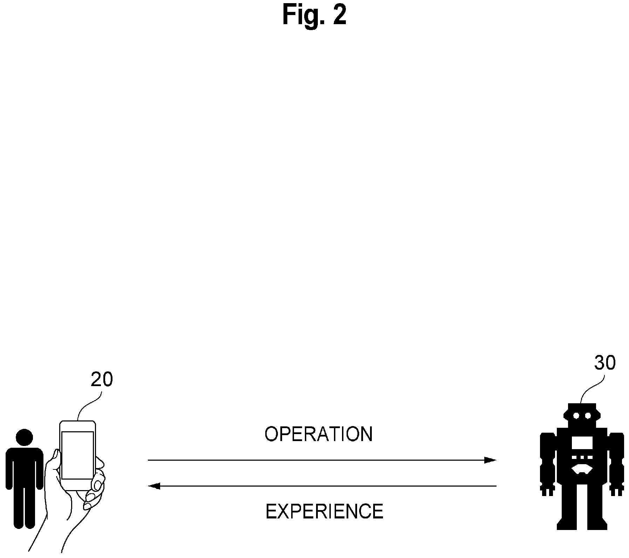

An exemplary configuration of a system 1 according to an embodiment will be described with reference to Figs. 1 and 2. In the present embodiment, the system 1 allows a user to remotely control one or a plurality of robots through a terminal device. The plurality of robots are placed in different places. When the user operates a certain robot through one terminal device, the user can switch the robot to be operated and operate another robot.

As illustrated in Fig. 1, the system 1 includes a server device 10, terminal devices 20a, 20b and 20c, and robots 30a, 30b and 30c. Each device or robot is configured to be able to communicate with other devices or robots in a wireless manner or wired manner (or both). In the example illustrated in Fig. 1, the system 1 includes three terminal devices, but the number of terminal devices is set arbitrarily and may be two or less or four or more. The terminal devices 20a, 20b, and 20c may have the same configuration or may have different configurations. In the present embodiment, the terminal devices 20a, 20b, and 20c are collectively referred to as the terminal device 20 when they are referred to without distinction from each other. In addition, the system 1 includes three robots, but the number of robots is set arbitrarily and may be two or less or four or more. The robots 30a, 30b, and 30c may have the same configuration or may have different configurations. In the present embodiment, the robots 30a, 30b, and 30c are collectively referred to as the robot 30 when they are referred to without distinction from each other. Hereinafter, an outline of each of the devices and robots will be described.

The server device 10 is a device that executes various processes with respect to remotely controlling the plurality of robots 30 by the terminal device 20. The server device 10 further performs processing for searching for an available robot 30, management of reservation registration for operating the robot 30, and the like. The server device 10 is constituted by an information processing device such as a server computer. The server device 10 may be constituted by one information processing device, or may be constituted by a plurality of information processing devices (for example, cloud computing or edge computing).

The terminal device 20 is an information processing device used by a user to operate the robot 30 and reserve operation thereof. The terminal device 20 is, for example, a general-purpose or dedicated information processing device such as a smartphone, a tablet terminal, a personal digital assistants (PDA), a personal computer, a head-mounted display, or an operating system for a specific purpose. The terminal device 20 used to reserve the operation of the robot 30 may be a device different from the terminal device 20 used for the operation or may be the same device.

The robot 30 is an unfixed robot. The robot 30 being not fixed includes a case where the robot 30 is a mobile type including a drive unit for movement by wheels or the like, and a case where the robot 30 is a wearable type that can be worn on a person and includes a drive unit for an operation of a manipulator or the like.

A mobile robot is disclosed in, for example, Patent Document 1. Moving parts of mobile robots include those that move by one, two or multiple wheels, those that move by caterpillars, those that move on rails, those that move by jumping, those that perform bipedal locomotion, quadrupedal locomotion, or multipedal locomotion, those that navigate on or under water with screw propellers, and those that fly with propellers or the like. A wearable robot is disclosed in, for example, MHD Yamen Saraiji, Tomoya Sasaki, Reo Matsumura, Kouta Minamizawa and Masahiko Inami, "Fusion: full body surrogacy for collaborative communication," Proceeding SIGGRAPH '18 ACM SIGGRAPH 2018 Emerging Technologies Article No. 7. Further, the robot 30 includes a vehicle or heavy machine that can move automatically or semi-automatically, a drone, or an airplane. Further, the robot 30 includes a robot installed in a sports stadium or the like and equipped with a camera that can move on rails. Further, the robot 30 may be a satellite type robot launched into outer space, and includes a robot capable of attitude control and control of an imaging direction of a camera. In addition, the robot 30 may be a so-called telepresence robot or an avatar robot.

As illustrated in Fig. 2, the user can remotely operate the robot 30 (for example, move the robot 30 or operate a camera mounted on the robot 30) through the terminal device 20. A communication architecture for transmission and reception of operation signals or data between the terminal device 20 and the robot 30 can adopt any architecture, such as peer-to-peer (P2P) or a client server. The robot 30 operates in accordance with signals received from the terminal device 20, and transmits data that is acquired, detected, or the like by the robot 30 in a place where the robot 30 is located, such as image data and sound data acquired by the robot 30 through a camera, microphone, and other devices mounted on the robot 30, to the terminal device 20. Thereby, the user can gain an experience as if he or she were in the place where the robot 30 is located, through the terminal device 20 and the robot 30.

### <Outline of robot operation>

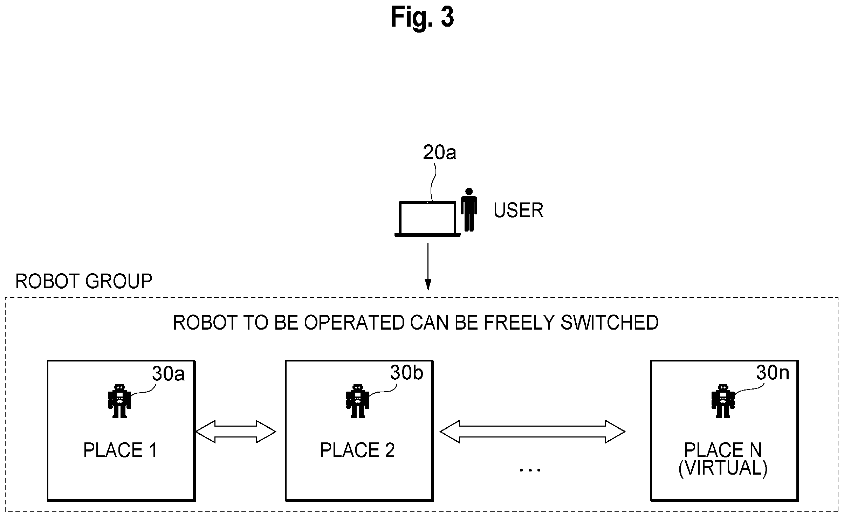

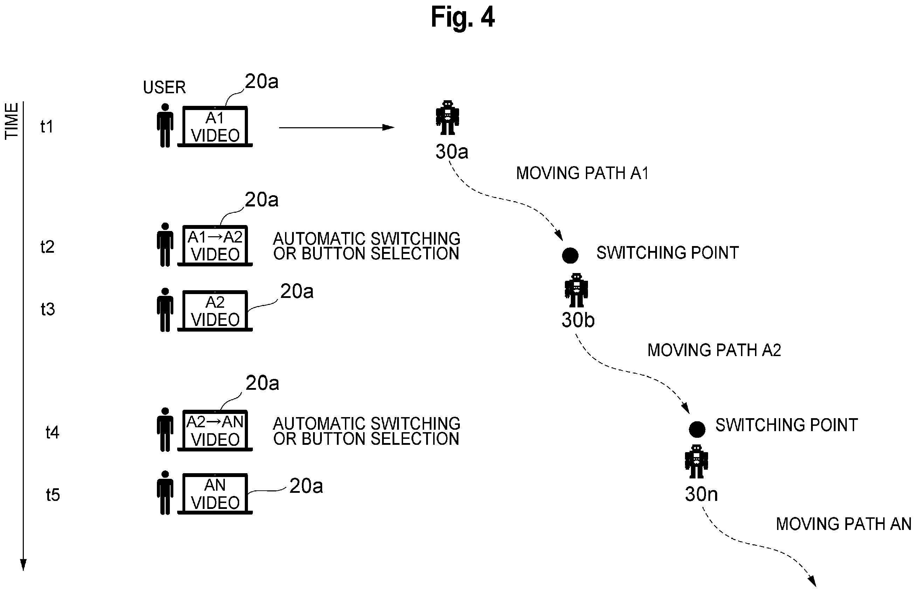

An outline of the robot operation in the present embodiment will be described with reference to Figs. 3 and 4. A robot operation method described herein is merely an example, is exemplary only and is not exclusive of other methods.

Fig. 3 conceptually illustrates a terminal device 20a used by a user and a robot group. The robot group illustrated in Fig. 3 is a collection of a plurality of robots 30 that are operable by the terminal device 20a. The robot group includes a robot 30a, a robot 30b,..., and a robot 30n (n is an integer of 3 or more) which are located in different places.

The plurality of robots 30 included in one robot group may be set such that the robots 30 are included not in the same place but in different places, for example, in places separated from each other by a predetermined distance or more. The predetermined distance may be, for example, 10 m, 100 m, 1 km, or 100 km. Other examples of the different places include different floors in the same facility, different sections in the same facility, different facilities, different administrative divisions, or different time zones.

The plurality of robots 30 included in one robot group include, for example, a plurality of robots 30 associated with each other in advance, or a plurality of robots 30 belonging to the same group among groups classified under predetermined conditions. Here, at least some of the plurality of robots 30 may be robots existing in a virtual world. That is, the plurality of robots 30 may include robots existing in the real world and robots existing in the virtual world.

The user can freely switch and operate the robot 30 to be operated among the plurality of robots 30 included in the robot group through the terminal device 20a. The switching of the robot 30 to be operated may be performed in accordance with the user's operation, or may be automatically performed when preset conditions are satisfied. Here, for example, processing for switching an operation target from a first robot 30i to a second robot 30j is realized by the terminal device 20 executing disconnection of a communication session between the terminal device 20 and the first robot 30i and establishment of a communication session between the terminal device 20 and the second robot 30j sequentially or substantially simultaneously. Further, in order to switch the robot 30 to be operated, the robot 30 receives, for example, information (for example, an IP address) for connection to the robot 30, which is a switching destination, from the server device 10, disconnects a communication session with the robot 30 being connected for operation in accordance with the user's operation or automatically, and starts processing for connection to the robot 30, which is a switching destination. Note that the robot 30 may store information for connection to the robot 30, which is a switching destination, in its own device in advance and may start processing for connection to the robot 30, which is a switching destination, by using the information. Further, in a case where a client server is adopted as a communication architecture for remote operation, and the terminal device 20 and the robot 30 are communicating with each other through the server device 10, the server device 10 may disconnect a communication session between the terminal device 20 and the robot 30 being connected for operation in accordance with the user's operation or automatically, and may start processing for connecting a communication session between the robot 30, which is a switching destination, and the terminal device 20.

In this manner, according to the present embodiment, the user can freely switch and operate the robot 30 to be operated among the plurality of robots 30 through the terminal device 20a. For this reason, the user can gain an experience as if he or she were in each of the plurality of places where the plurality of robots 30 are located, without moving to each of the places.

An example of a method of switching the robot 30 to be operated will be described with reference to Fig. 4. In Fig. 4, switching of the robot 30 to be operated is conceptually illustrated in time series. First, at time t1, the user operates the robot 30a selected from a predetermined robot group through the terminal device 20a to move the robot 30a along a moving path A1. The predetermined robot group is a plurality of robots 30 that satisfy some conditions (for example, a plurality of robots 30 that are hit as a result of keyword searching of a database of robots 30, a plurality of robots 30 preliminarily grouped into the same category according to some theme, or the like). During the operation of the robot 30a, a video captured by a camera of the robot 30a (a video captured in the moving path A1) is displayed on a display unit of the terminal device 20a. Thereafter, when the robot 30a reaches a predetermined switching point at time t2, an operation target of the terminal device 20a is switched from the robot 30a to the robot 30b, for example, automatically or according to the user's operation.

Thereafter, the user operates the robot 30b at time t3 through the terminal device 20a to move the robot 30b along a moving path A2. In the meantime, a video captured by a camera of the robot 30b (a video captured in the moving path A2) is displayed on the display unit of the terminal device 20a. Thereafter, when the robot 30b reaches a predetermined switching point at time t4, an operation target of the terminal device 20a is switched from the robot 30b to the robot 30n, for example, automatically or according to the user's operation.

In the example described with reference to Fig. 4, the robots 30a and 30b may be robots existing in the real world, and the robot 30n may be a robot existing in a virtual world. In this case, when the robot 30a and the robot 30b are operated, a scene image of the real world captured by the robot 30a and the robot 30b is displayed on the display unit of the terminal device 20a. In addition, when the robot 30n is operated, a scene image of the virtual world captured by a virtual camera of the robot 30n is displayed on the display unit of the terminal device 20a.

In this manner, according to the present embodiment, the user can instantly move to each of the places where the plurality of robots 30 are located through the terminal device 20a and gain an experience as if he or she were in the place. For example, in the example of Fig. 4, it is assumed that the robot 30a is placed in an art museum in Tokyo, the robot 30b is placed in an art museum in Paris, and the virtual robot 30c is placed in an art museum in a virtual world. In this case, the user can, for example, appreciate art in the art museum in Tokyo, appreciate art in the art museum in Paris, and then appreciate art in the art museum in the virtual world through the terminal device 20a without actually moving to the art museums.

### <Functional configuration>

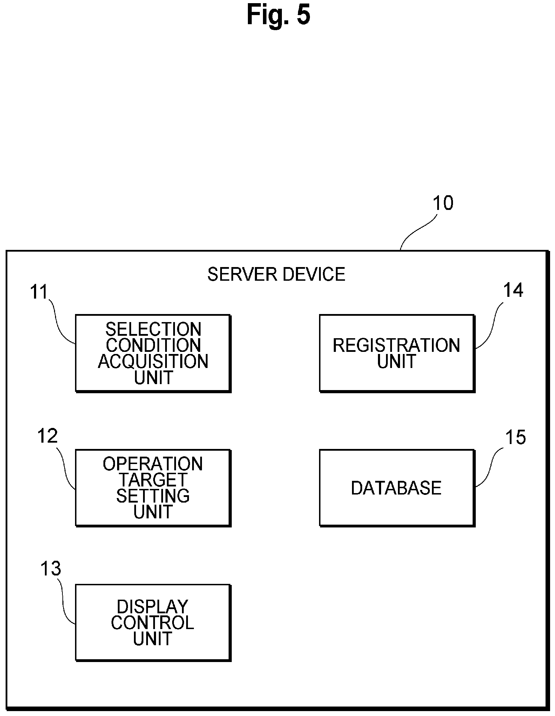

Configurations of main functions of the server device 10 will be described with reference to Fig. 5. These functions are realized by a control unit (processor) of the server device 10 reading and executing computer programs stored in a storage unit. Hardware configurations of these devices will be described later.

As illustrated in Fig. 5, the server device 10 includes a selection condition acquisition unit 11, an operation target setting unit 12, a display control unit 13, a registration unit 14, and a database 15 as configurations of main functions. The functions of the server device 10 are not limited thereto, and the server device 10 may have general functions of a computer and other functions.

The selection condition acquisition unit 11 acquires a selection condition for the robot 30 set to be operable by a certain terminal device 20 (for example, the terminal device 20a). The selection condition includes information on contents that can be experienced by the user through the robot 30. The selection condition is acquired by any method.

For example, the selection condition for the robot 30 that can be operated by the terminal device 20a is acquired based on the user's input to the terminal device 20a. In this case, for example, when the user inputs "Picasso" to the terminal device 20a, first, the server device 10 receives information based on the user's input from the terminal device 20a. Thereafter, based on the information received by the server device 10, the selection condition acquisition unit 11 may acquire (or set) a condition that the robot 30 is located in an art museum where a Picasso's painting is placed (or the robot 30 is located near the Picasso's painting) (that is, a condition that the place is a place where the user can experience Picasso) as the selection condition for the robot 30. In addition, as another example, in a case where the user inputs "shopping" to the terminal device 20a, a condition that the robot 30 is located in a facility which is set as a recommendation in advance among facilities where shopping is possible (for example, a department store) may be acquired as the selection condition for the robot 30. The user's input to the terminal device 20a includes a manual input by the user's typing or the like, a sound input, or an input using any of other methods.

The operation target setting unit 12 selects a plurality of robots 30 operable by the terminal device 20 as operable robots based on the selection condition acquired by the selection condition acquisition unit 11. Further, the operation target setting unit 12 sets one robot 30 among the selected operable robots as an operation target.

A method of selecting one robot 30 from among the operable robots as an operation target is performed by any method. For example, the most popular robot 30 may be selected from among the robots 30 included in the operable robots, the robot 30 may be selected in accordance with the attributes of the user (for example, the robot 30 that is placed at a location farthest from an area where the user lives or stays), or the robot 30 may be selected in accordance with the user's selection. When a certain robot 30 is set as an operation target, the authority to operate the robot 30 is set in the terminal device 20. Further, the operation target setting unit 12 can switch the operation target from a certain robot 30 (for example, the robot 30a) to another robot 30 (for example, the robot 30b) among the operable robots. The operation target setting unit 12 can switch (or switches) the robot 30 to be operated, for example, when predetermined switching conditions are satisfied. The predetermined switching conditions include conditions related to the user's input, movement of the robot 30, or an elapsed time. For example, the predetermined switching conditions include a condition that a switching instruction is received from the user through the terminal device 20, a condition that the position of the robot 30 being operated reaches a predetermined location, or a condition that an operation time of the robot 30 being operated has elapsed a predetermined period of time.

In order to select a plurality of robots 30 as operable robots, the operation target setting unit 12 refers to the database 15 in which information on the robots 30 is stored and managed. The database 15 also stores and manages information on which robot 30 each terminal device 20 has the authority to operate. When the operation target setting unit 12 performs setting or switching of an operation target for the robot 30, the information on the operation authority for the robot 30 which is stored in the database 15 is updated accordingly.

For the processing for switching an operation target for the robot 30, for example, first, the server device 10 transmits information (for example, an IP address) for connection to the robot 30, which is a switching destination, to the terminal device 20 based on the information on the operation authority, and the terminal device 20 disconnects a communication session with the robot 30 being connected based on the received information and starts processing for connection to the robot 30 which is a switching destination. As another example, in a case where a system configuration in which communication for remote operation is performed between the terminal device 20 and the robot 30 through the server device 10 is adopted, the server device 10 can also switch the robot 30 that communicates with the terminal device 20, based on a change in the operation authority.

Hereinafter, a method of selecting an operable robot by the operation target setting unit 12 will be further described. The selection of an operable robot based on a selection condition by the operation target setting unit 12 is performed by an arbitrary method. Three examples of a method of selecting an operable robot will be described below. However, a method of selecting an operable robot is not limited thereto.

### (1) Selection of related robot

The operation target setting unit 12 can specify a robot 30 according to the above-described selection condition with reference to the database 15 and select operable robots so as to include the specified robot 30 and robots 30 related to the specified robot 30. In the present embodiment, when information on the robots 30 which is stored in the database 15 indicates that there is some relationship between the robot 30 and another robot 30, it is determined that the two robots 30 are related to each other. For example, it is assumed that the robot 30a placed near a Picasso painting at the first floor of an art museum A in Tokyo is specified in accordance with a selection condition "Picasso's painting". In this case, the robot 30b placed at the second floor of the art museum A is related to the robot 30a in that they are placed in the same art museum, and thus it may be determined that the robots 30a and 30b are related to each other. That is, in this example, the operation target setting unit 12 may select operable robots so as to include the robot 30a and the robot 30b.

### (2) Selection based on image captured by robot

The operation target setting unit 12 can select operable robots so as to include the robot 30 selected based on information specified by image recognition processing for an image captured by the robot 30. For example, it is assumed that an image captured by the camera mounted on the robot 30a which is specified based on the selection condition (or the robot 30a being operated through the terminal device 20) includes a wine bottle placed in a wine shop of a department store. In this case, the operation target setting unit 12 can specify a winery where the wine of the wine bottle is produced based on an image recognition processing result for the image, and can select operable robots so as to include the robot 30b placed in the winery. That is, the operation target setting unit 12 can select operable robots so as to include other robots 30 related to an object in the vicinity of the robot 30, based on an image captured by the robot 30 specified based on the selection condition (or the robot 30 being operated through the terminal device 20). Note that the image recognition processing may be performed in the robot 30, and information on the result of the image processing may be transmitted to the server device 10. Alternatively, the server device 10 may receive the image captured by the robot 30 and perform image processing. The image processing itself may be performed in other devices.

### (3) Selection based on group

The operation target setting unit 12 can select operable robots so as to include robots 30 classified into the same group and specified in accordance with the selection condition. For example, in a case where the selection condition is "Paris", the operation target setting unit 12 selects operable robots so as to include the robots 30 classified into (belonging to) a group related to "Paris".

The classification of the robots 30 into groups is performed by any method. For example, the operation target setting unit 12 may determine the classification of the robots 30 into groups in accordance with meta information (including information, such as tag information or attribute information, which can be associated with the robots 30) which is preset for the robots 30. The meta information which is preset for the robots 30 may be acquired from the database 15 or acquired from the robots 30.

In addition, the classification into groups may be determined in accordance with contents that can be experienced by the user through the robot 30. In this case, for example, a robot 30 placed in an aquarium may be classified into a group A, and a robot 30 placed in a shopping mall may be classified into a group B different from the group A. Information on the contents that can be experienced by the user through the robot 30 may be acquired from the database 15 or acquired from the robot 30.

In addition, the classification into groups may be determined based on information specified by image recognition processing for an image captured by the robot 30. In this case, for example, when clothing is recognized by image recognition processing on an image captured by the robot 30c in a department store, the robot 30c may be classified into a group C related to clothing. In addition, when a home appliance is recognized by image recognition processing on an image captured by the robot 30d in a department store, the robot 30d may be classified into a group D related to home appliances. Note that the image recognition processing may be performed in the robot 30, and information on the result of the image processing may be transmitted to the server device 10. Alternatively, the server device 10 may receive the image captured by the robot 30 and perform image processing. The image processing itself may be performed in other devices.

The display control unit 13 controls contents to be displayed on the display units of the terminal device 20 and the robot 30. For example, the display control unit 13 controls display on the display unit of the terminal device 20 by determining the contents to be displayed on the display unit of the terminal device 20 based on information received by the server device 10 in response to the user's operation on the terminal device 20 and transmitting the information on the displayed contents to the terminal device 20.

The display control unit 13 can perform control so that, for example, an image for the user to give an instruction for searching for operable robots through the terminal device 20 or an image for selecting the robot 30 to be operated is displayed on the display unit of the terminal device 20. In addition, the display control unit 13 can perform control so that an image for receiving an instruction for switching an operation target of the terminal device 20 from a certain robot 30 (for example, the robot 30a) to another robot 30 (for example, the robot 30b) is displayed on the display unit of the terminal device 20a.

The registration unit 14 is a processing unit that acquires information on the robot 30 from another processing unit of the server device 10 or another device, stores the information in the database 15, or updates or deletes the information stored in the database 15. The information on the robot 30 includes, for example, identification information of the robot 30, information on a location where the robot 30 is placed, information on the ability of the robot 30, reservation information for operation of the robot 30 through the terminal device 20, and the like.

The database 15 stores various data such as data necessary for processing executed in the server device 10 and data generated or set by the processing. The information stored in the database 15 includes, for example, user information, information on the terminal device 20 used to operate the robot 30, information on the robot 30 (including the robot 30 in the real world and the robot 30 in a virtual world), information on the authority to operate the robot 30, reservation information for operation, and the like. In addition, the database 15 stores image data of the scene of the virtual world which is imaged by a virtual camera of the robot 30 in the virtual world. The image data is transmitted to the terminal device 20 while the robot 30 in the virtual world is being operated by the terminal device 20.

Although the functions of the server device 10 have been described with reference to Fig. 5, some or all of the functions described above may be executed by the terminal device 20 or the robot 30.

As described above, according to the present embodiment, the selection condition acquisition unit 11 acquires information on a selection condition, and the operation target setting unit 12 selects a first robot 30 (for example, the robot 30a), among the plurality of robots 30 selected in accordance with the acquired selection condition, as an operation target to be operated by the terminal device 20. Further, the operation target setting unit 12 performs control so that an operation target can be switched from the first robot to a second robot 30 (for example, the robot 30b) among the plurality of robots 30 selected above. As a result, the user can freely switch and operate the robot 30 to be operated among the plurality of robots 30 through the terminal device 20. For this reason, the user can gain a more valuable experience as if he or she were at each of the plurality of places where the plurality of robots 30 are located, without moving to each of the places.

### <Processing flow>

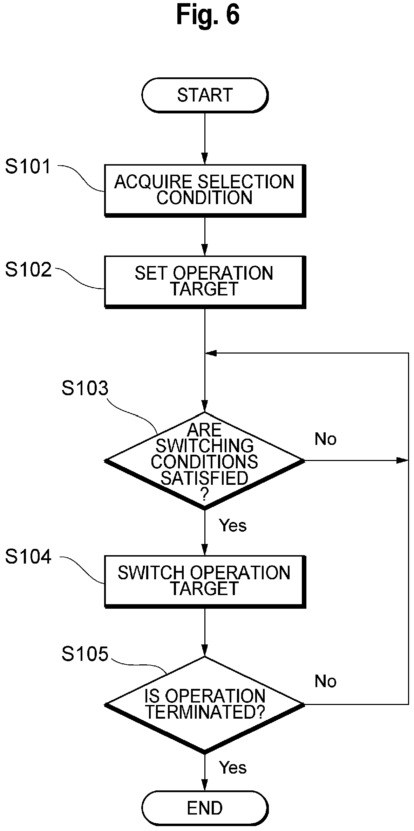

As an example of a processing flow in the system 1, an example of processing for setting the robot 30 to be operated by the terminal device 20 and switching the operation target will be described with reference to Fig. 6. This processing is realized by a processor reading and executing a computer program stored in a storage unit in the server device 10 and the terminal device 20. Note that a detailed description of each processing step in this processing, which has already been described in detail, will be omitted here.

This processing starts when the user inputs information on contents that are desired to be experienced by the user through the robot 30 to the terminal device 20a, and the server device 10 receives the information.

In step S101, the server device 10 acquires a selection condition for the robot 30 which is set to be operable by the terminal device 20a, based on the information on the contents that are desired to be experienced by the user through the robot 30, the information being received from the terminal device 20a.

Next, in step S102, the server device 10 selects a plurality of robots 30 operable by the terminal device 20 as operable robots, based on the acquired selection condition. For example, the robot 30a and the robot 30b are selected as operable robots. Further, the operation target setting unit 12 sets one robot 30 among the selected operable robots as an operation target. For example, among the robots 30a and 30b that are operable robots, the robot 30a is set as an operation target. Thereafter, the user operates, for example, the robot 30a which is set as an operation target through the terminal device 20a. The user can move the robot 30a through the terminal device 20a, and can appreciate images and sounds acquired by the camera and microphone mounted on the robot 30a.

Thereafter, in step S103, the server device 10 determines whether or not predetermined switching conditions for the robot 30 to be operated by the terminal device 20a have been satisfied. The predetermined switching conditions may include at least one of, for example, a condition that the position of the robot 30 being operated reaches a predetermined location or a condition that a switching instruction is received from the user through the terminal device 20. In a case where the predetermined switching conditions have been satisfied, the processing proceeds to step S104 (Yes in step S103).

In step S104, the server device 10 switches an operation target to be operated by the terminal device 20a to another robot 30 (for example, switches from the robot 30a to the robot 30b). Another robot 30 after the switching is selected by an arbitrary method. For example, a preset robot 30 may be selected, or a robot may be selected in accordance with the user's input.

Next, in step S105, the server device 10 determines whether or not to terminate the operation of the robot 30 by the terminal device 20a. The server device 10 determines to terminate the operation of the robot 30, for example, when an instruction for terminating the operation of the robot 30 is received from the terminal device 20a or when a preset operation termination time is reached. In a case where it is determined to terminate the operation of the robot 30, the processing illustrated in Fig. 6 is terminated, and otherwise, the processing proceeds to step S103.

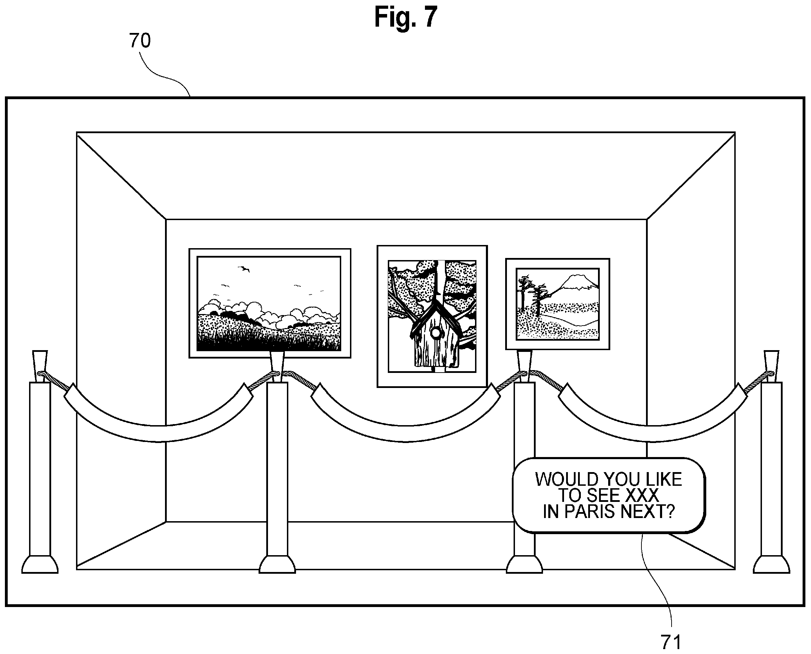

An example of the processing in steps S103 and S104 of Fig. 6 will be described with reference to Fig. 7. Fig. 7 illustrates an example of an image displayed on the display unit of the terminal device 20a during the operation of the robot 30a. As illustrated in Fig. 7, an image 70 includes an image of the scene in an art museum imaged by the robot 30a and an image 71 of a button. In the button image 71, "Would you like to see XXX in Paris next?" is displayed. For example, in a situation where the user operates the robot 30a through the terminal device 20a and is viewing a painting displayed in an art museum in Tokyo, the button image 71 is displayed on the display unit of the terminal device 20a when the position of the robot 30a reaches a predetermined location (for example, near the exit of the art museum) or when an appreciation time has elapsed a predetermined period of time (for example, one hour). When the button image 71 is selected by the user, the server device 10 determines that a predetermined switching condition is satisfied (Yes in step S103 in Fig. 6), and an operation target to be operated by the terminal device 20a is switched to the robot 30 corresponding to the selected button image 71 (for example, the robot 30b placed in an art museum in Paris) (step S104 in Fig. 6).

As described above, according to the present embodiment, the server device 10 acquires information on the selection condition, and sets the first robot 30 (for example, the robot 30a), among the plurality of robots 30 selected in accordance with the acquired selection conditions, as an operation target to be operated by the terminal device 20. Further, the server device 10 performs control so that the operation target can be switched from the first robot to the second robot 30 (for example, the robot 30b) among the plurality of robots 30 selected above. As a result, the user can freely switch and operate the robot 30 to be operated among the plurality of robots 30 through the terminal device 20. For this reason, the user can gain a more valuable experience as if he or she were at each of the plurality of places where the plurality of robots 30 are located, without moving to each of the places. Note that, although an embodiment in which a selection condition is acquired and then the setting and switching of a robot to be operated are performed has been described here, a robot to be operated may be switched based on a selection condition acquired when the first robot is being operated.

### <Hardware configuration of computer>

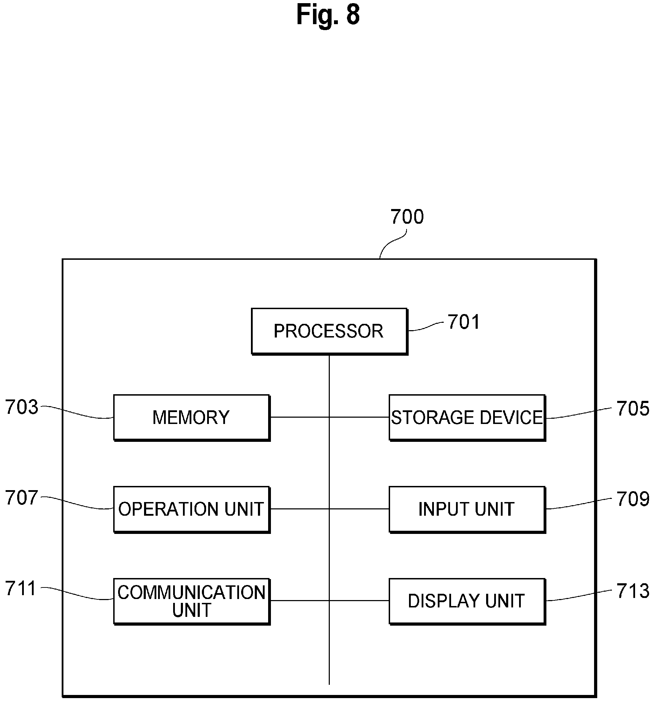

Next, an exemplary hardware configuration of a computer (information processing device) for mounting the server device 10 and the terminal device 20 in the present embodiment will be described with reference to Fig. 8.

As illustrated in Fig. 8, a computer 700 includes a processor 701, a memory 703, a storage device 705, an operation unit 707, an input unit 709, a communication unit 711, and a display device 713 as main configurations. The computer 700 may not include at least some of these configurations. In addition to these configurations, the computer 700 may also include other configurations that general-purpose or special-purpose computers generally include. In addition, the computer 700 may not include some of the configurations illustrated in Fig. 8.

The processor 701 is a control unit that controls various processing in the computer 700 by executing programs stored in the memory 703. Thus, the processor 701 realizes the functions of the devices described in the above embodiment and controls the execution of the above-described processing by other configurations included in the computer 700 and the programs in cooperation.

The memory 703 is a storage medium such as a random access memory (RAM). In the memory 703, program codes of programs executed by the processor 701 and data necessary for executing the programs are temporarily read from the storage device 705 or the like or stored in advance.

The storage device 705 is a non-volatile storage medium such as a hard disk drive (HDD). The storage device 705 stores an operating system, various programs for realizing the above-described configurations, data of the above-described processing results, and the like.

The operation unit 707 is a device for receiving an input from the user. Specific examples of the operation unit 707 include a keyboard, a mouse, a touch panel, a joystick, various sensors, a wearable device, and the like. The operation unit 707 may be detachably connected to the computer 700 through an interface such as a universal serial bus (USB).

The input unit 709 is a device for inputting data from the outside of the computer 700. A specific example of the input unit 709 is a drive device or the like for reading data stored in various storage media. The input unit 709 may be detachably connected to the computer 700. In this case, the input unit 709 is connected to the computer 700 through an interface such as a USB.

The communication unit 711 is a device for performing data communication with a device outside the computer 700 through a network in a wired or wireless manner. The communication unit 711 may be detachably connected to the computer 700. In this case, the communication unit 711 is connected to the computer 700 through an interface such as a USB.

The display device 713 is a device for displaying various information. Specific examples of the display device 713 include a liquid crystal display, an organic EL display, a display of a wearable device, and the like. The display device 713 may be detachably connected to the outside of the computer 700. In this case, the display device 713 is connected to the computer 700 through, for example, a display cable or the like. Further, in a case where a touch panel is adopted as the operation unit 707, the display device 713 can be configured integrally with the operation unit 707.

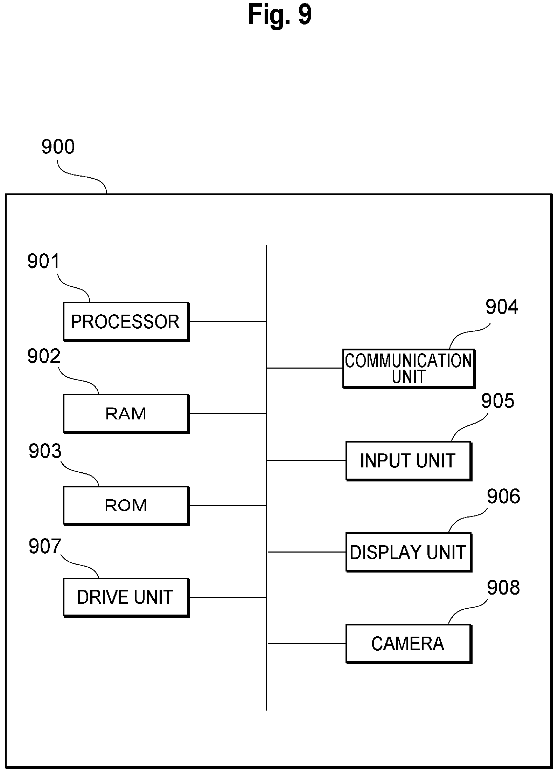

Next, exemplary hardware configurations of the computer (information processing device) and other main configurations which are mounted on the robot 30 (excluding the robot 30 existing in the virtual world) in the present embodiment will be described with reference to Fig. 9. The robot 30 includes a processor 901, a random access memory (RAM) 902, a read only memory (ROM) 903, a communication unit 904, an input unit 905, a display unit 906, a drive unit 907 and a camera 908. The configuration illustrated in Fig. 9 is an example, and the robot 30 may have configurations other configurations or may not have some of these configurations. For example, the robot 30 may further include a speaker, a microphone, and various sensors. In addition, the robot 30 may include a unit for specifying the position of its own device.

The processor 901 is a computation unit of the robot 30, such as a central processing unit (CPU). The RAM 902 and the ROM 903 are storage units that store data necessary for various processing and data of processing results. In addition to the RAM 902 and the ROM 903, the robot 30 may include a large-capacity storage unit such as a hard disk drive (HDD). The communication unit 904 is a device that communicates with an external device. The input unit 905 is a device for inputting data from the outside of the robot 30. The display unit 906 is a device for displaying various information.

The processor 901 is a control unit that performs control related to the execution of programs stored in the RAM 902 or the ROM 903 and performs data computation and processing. The processor 901 executes a program (communication program) for controlling communication through the robot. The processor 901 receives various data from the input unit 905 and the communication unit 904, displays computation results of the data on the display unit 906, and stores them in the RAM 902.

The input unit 905 receives an input of data from the user, and may include, for example, a keyboard and a touch panel. In addition, the input unit 905 may include a microphone for inputting sounds.

The display unit 906 visually displays computation results obtained by the processor 901 and may be constituted by, for example, a liquid crystal display (LCD). The display unit 906 may display images captured by the camera 908 of the robot 30.

The communication program may be stored in a computer-readable storage medium such as the RAM 902 or the ROM 903 and provided, or may be provided through a communication network connected thereto by the communication unit 904. In the robot 30, various operations for controlling the robot 30 are realized by the processor 901 executes the communication program, so that various operations for controlling the robot 30 are realized. Note that these physical configurations are examples and do not necessarily have to be independent configurations. For example, the computer 900 may include a large-scale integration (LSI) in which the processor 901, the RAM 902, and the ROM 903 are integrated with each other.

The drive unit 907 includes a remotely operable actuator and includes a mobile portion such as a wheel, a manipulator, and the like. In a case where the robot 30 is a mobile robot, the drive unit 907 includes at least a mobile portion such as a wheel, but may include a manipulator. In a case where the robot 30 is a wearable type, the drive unit 907 includes at least a manipulator.

The camera 908 includes an imaging device that captures still images or moving images, and transmits the captured still images or moving images to an external device through the communication unit 904.

### <Modification>

A program for mounting the system 1 (or the server device 10, the terminal device 20, or the robot 30) in the present embodiment can be recorded on various recording media such as an optical disk such as a CD-ROM, a magnetic disk, and a semiconductor memory. In addition, the above-described program can be installed or loaded on a computer by downloading it through a recording medium or through a communication network or the like.

The present invention is not limited to the embodiment described above, and can be implemented in various other forms without departing from the scope of the present invention. The above-described embodiment is merely an example in all respects and should not be construed as limiting.

### Reference Signs List

- 1: System
- 10: Server device
- 20: Terminal device
- 30: Robot

## Claims

1. An information processing device comprising:
a processor; and
a storage unit,
wherein the processor is configured to execute a program stored in the storage unit to perform a control method including
acquiring information on a selection condition,
setting a first robot as an operation target to be operated by a terminal device, and
enabling the operation target to be switched from the first robot to a second robot, which is different from the first robot, among a plurality of robots selected in accordance with the selection condition.

2. The information processing device according to claim 1, wherein the enabling of the operation target to be switched is performed when predetermined conditions regarding a user's input, movement of the first robot, or an elapsed time are satisfied.

3. The information processing device according to claim 1 or 2, wherein the plurality of robots selected include the robot associated with the robot specified in accordance with the selection condition.

4. The information processing device according to any one of claims 1 to 3, wherein the plurality of robots selected include the robots selected based on information specified by image recognition processing for images captured by the robot.

5. The information processing device according to any one of claims 1 to 4, wherein the plurality of robots selected include the robots classified into the same group specified in accordance with the selection condition.

6. The information processing device according to claim 5, wherein the classification of the robots into the group includes being determined in accordance with meta information which is set for the robots in advance.

7. The information processing device according to claim 5 or 6, wherein the classification of the robots into the group includes being determined in accordance with contents capable of being experienced by a user through the robots.

8. The information processing according to any one of claims 5 to 7, wherein the classification of the robots into the group includes being determined based on information specified by image recognition processing for images captured by the robot.

9. The information processing device according to any one of claims 1 to 8, wherein the plurality of robots include a robot existing in the real world and a robot existing in a virtual world.

10. The information processing device according to any one of claims 1 to 9, wherein the information on the selection condition includes information on contents capable of being experienced by the user through the robot.

11. The information processing device according to any one of claims 1 to 10, wherein the plurality of robots are located at places separated from each other by a predetermined distance or more.

12. The information processing device according to any one of claims 1 to 11, wherein the control method includes controlling the operation target so that an image for receiving an instruction for switching from the first robot to the second robot is displayed on a display unit of the terminal device.

13. An information processing method performed by a computer, the information processing method comprising:
acquiring information on a selection condition;
setting a first robot, among a plurality of unfixed robots selected in accordance with the selection condition, as an operation target to be operated by a terminal device; and
enabling the operation target to be switched from the first robot to a second robot, which is different from the first robot, among the plurality of robots selected.

14. A storage medium storing a program for executing an information processing method including causing a computer to
acquire information on a selection condition,
set a first robot, among a plurality of unfixed robots selected in accordance with the selection condition, as an operation target to be operated by a terminal device; and
enable the operation target to be switched from the first robot to a second robot, which is different from the first robot, among the plurality of robots selected.
